(19) Europäisches Patentamt / European Patent Office / Office européen des brevets

(11) **EP 4 661 395 A1**

(12) **EUROPEAN PATENT APPLICATION**

(43) Date of publication:
**10.12.2025 Bulletin 2025/50**

(21) Application number: **24305888.0**

(22) Date of filing: **05.06.2024**

(51) International Patent Classification (IPC):
*H04N 19/12* (2014.01)     *H04N 19/176* (2014.01)
*H04N 19/593* (2014.01)

(52) Cooperative Patent Classification (CPC):
**H04N 19/12; H04N 19/176; H04N 19/593**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **BONNINEAU, Charles
  MONTREAL, H2J 1G1 (CA)**
• **PURI, Saurabh
  SAINT-LAZARE, J7T 0P6 (CA)**
• **NASER, Karam
  35250 MOUAZE (FR)**
• **LE LEANNEC, Fabrice
  35830 BETTON (FR)**

(74) Representative: **Interdigital
Immeuble ZEN 2
845 A, avenue des Champs Blancs
35510 Cesson-Sévigné (FR)**

(54) **ENCODING AND DECODING METHODS USING MULTIPLE TRANSFORM SET SELECTION AND CORRESPONDING APPARATUSES**

(57)      A decoding method is disclosed. An initial transform set is obtained. One or more alternative transform sets are obtained wherein each alternative transform set comprising one or more transform pairs. Transform pairs of the one or more alternative transform sets are added into a final alternative transform set only if non-redundant with a transform pair of the initial transform set. A transform pair is selected from any one of the initial transform set and the final alternative transform set. An image block is reconstructed using the selected transform pair.

S100
Obtain an initial transform set *initTrSet*

S102
Obtain one or more alternative transform sets, e.g., a list *listAltTrSets*

S104
Adding non-redundant transform pairs into *finalAltTrSet*

S106
Select one transform pair in *initTrSet* or in *finalAltTrSet*

S108
Reconstruct a block from the selected transform pair

**FIG. 8**

EP 4 661 395 A1

**Description**

<u>TECHNICAL FIELD</u>

The present embodiments generally relate to a method and an apparatus for video encoding and decoding using multiple transform set selection.

<u>BACKGROUND</u>

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

<u>SUMMARY</u>

In one implementation, a decoding method (an encoding method respectively) is provided that comprises obtaining one or more alternative transform sets, each alternative transform set comprising one or more transform pairs, adding transform pairs of the one or more alternative transform sets into a final alternative transform set only if non-redundant with a transform pair of an initial transform set. An image block may then be reconstructed (encoded respectively) using a transform pair selected in any one of the initial transform set and the final alternative transform set. On the decoder side, selecting a transform pair comprises decoding an index identifying a transform set among the initial transform set and the final alternative transform set and decoding an index identifying a transform pair in the identified transform set.

On the encoder side, the selected transform pair may be signaled by encoding an index identifying a transform set among the initial transform set and the final alternative transform set and encoding an index identifying the transform pair in the identified transform set. One or more embodiments also provide a computer program comprising instructions which when executed by one or more processors cause the one or more processors to perform the method according to any of the embodiments described herein. One or more of the present embodiments also provide a computer readable storage medium having stored thereon instructions for processing video data according to the methods described herein.

[One or more embodiments also provide a computer readable storage medium having stored thereon video data generated according to the methods described above. One or more embodiments also provide a method and apparatus for transmitting or receiving the video data generated according to the methods described herein.

<u>BRIEF DESCRIPTION OF THE DRAWINGS</u>

FIG. 1 illustrates a block diagram of a system within which aspects of the present embodiments may be implemented;

FIG. 2 illustrates a block diagram of an embodiment of a video encoder within which aspects of the present embodiments may be implemented;

FIG. 3 illustrates a block diagram of an embodiment of a video decoder within which aspects of the present embodiments may be implemented;

FIG. 4 illustrates an example of explicit MTS set selection in ECM (modeIdx = 4 and sizeIdx = 0);

FIG.5 illustrates the ROI (Region-Of-Interest) for LFNST16;

FIG. 6 illustrates the ROI (Region-Of-Interest) for LFNST8;

FIG. 7 illustrates that NSPT is applied to small blocks, while LFNST is applied for the rest;

FIG. 8 depicts a flowchart of a decoding method (encoding method respectively) according to an example;

**EP 4 661 395 A1**

FIG. 9 depicts a flowchart of a method for determining an alternative transform set according to an example; and

FIG. 10 illustrates an intra-MTS look-up table indexed by intra modes and block sizes ;

FIG. 11 illustrates the principles of block size shifting in the intra-MTS look-up table; and

FIG. 12 illustrates the principles of intra mode shifting in the intra-MTS look-up table.

DETAILED DESCRIPTION

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

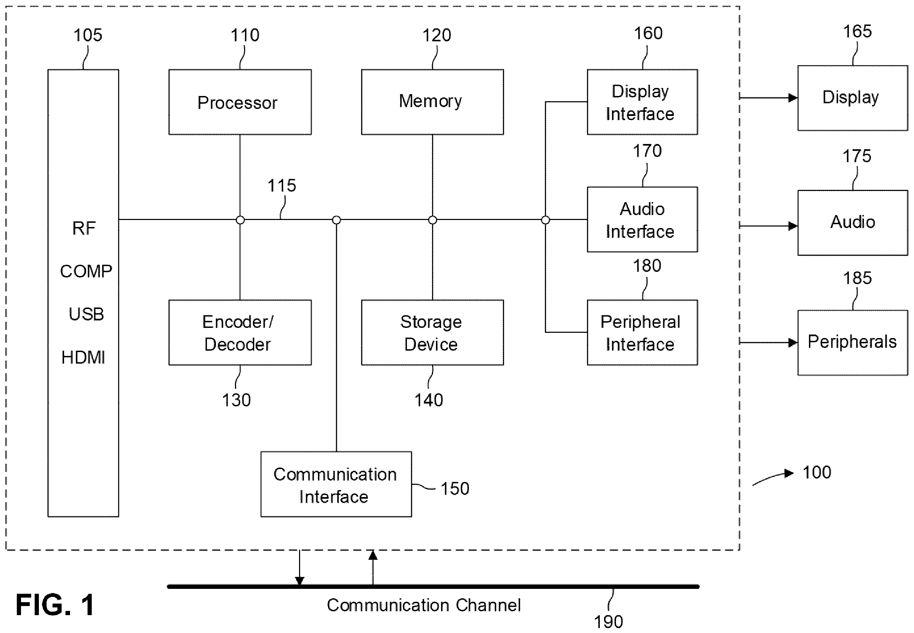

The aspects described and contemplated in this application can be implemented in many different forms. FIGs. 1, 2 and 3 below provide some embodiments, but other embodiments are contemplated and the discussion of FIGs. 1, 2 and 3 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium (e.g. a non-transitory computer readable storage medium) having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "encoded" or "coded" may be used interchangeably, the terms "pixel" and "sample" may be used interchangeably and the terms "image," "picture" and "frame" may be used interchangeably. Usually, but not necessarily, the term "reconstructed" is used at the encoder side while "decoded" is used at the decoder side.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

For the sake of clarity, satisfying, failing to satisfy a condition and configuring condition parameter(s) are described throughout embodiments described herein as relative to a threshold (e.g., greater, or lower than), a (e.g., threshold) value, configuring the (e.g., threshold) value, etc.). For example, satisfying a condition may be described as being above a (e.g., threshold) value, and failing to satisfy a condition (e.g., performance criteria) may be described as being below a (e.g., threshold) value. Embodiments described herein are not limited to threshold-based conditions. Any kind of other condition and parameter(s) (such as e.g., belonging or not belonging to a range of values) may be applicable to embodiments described herein.

The present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

**FIG. 1** illustrates a block diagram of an example of a system in which various aspects and embodiments can be implemented. System 100 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 100, singly or in combination, may be embodied in a single integrated circuit, multiple ICs, and/or discrete components. For example, in at least one embodiment, the processing and encoder/decoder elements of system 100 are distributed across multiple ICs and/or discrete components. In various embodiments, the system 100 is communicatively coupled to other systems, or to other electronic devices, via, for example, a communications bus or through dedicated input and/or output ports. In various embodiments, the system 100 is configured to implement one or more of the aspects described in this application.

The system 100 includes at least one processor 110 configured to execute instructions loaded therein for implementing, for example, the various aspects described in this application.

Processor 110 may include embedded memory, input output interface, and various other circuitries as known in the art. The system 100 includes at least one memory 120 (e.g., a volatile memory device, and/or a non-volatile memory device). System 100 includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100 includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100 or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input video, the decoded video or portions of the decoded video, the bitstream, matrices, variables, and intermediate or final results from the processing of equations, formulas, operations, and operational logic.

In some embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 100 may be provided through various input devices as indicated in block 105. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1, include composite video.

In various embodiments, the input devices of block 105 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 100 to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/decoder 130 operating in combination with the memory and storage elements to process the datastream as necessary for presentation on an output device.

Various elements of system 100 may be provided within an integrated housing, Within the integrated housing, the various elements may be interconnected and transmit data therebetween using suitable connection arrangement 115, for example, an internal bus as known in the art, including the I2C bus, wiring, and printed circuit boards.

The system 100 includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100, in various embodiments, using a Wi-Fi network such as IEEE 802.11 (IEEE refers to the Institute of Electrical and Electronics Engineers). The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100 using a set-top box that delivers the data over the HDMI connection of the input block 105. Still other embodiments provide streamed data to the system 100 using the RF connection of the input block 105. As indicated above, various embodiments provide data in a non-streaming manner. Additionally, various embodiments use wireless networks other than Wi-Fi, for example a cellular network or a Bluetooth network.

The system 100 may provide an output signal to various output devices, including a display 165, speakers 175, and other peripheral devices 185. The display 165 of various embodiments includes one or more of, for example, a touchscreen display, an organic light-emitting diode (OLED) display, a curved display, and/or a foldable display. The display 165 can be for a television, a tablet, a laptop, a cell phone (mobile phone), or other device. The display 165 can also be integrated with other components (for example, as in a smart phone), or separate (for example, an external monitor for a laptop). The other peripheral devices 185 include, in various examples of embodiments, one or more of a stand-alone digital video disc (or digital versatile disc) (DVR, for both terms), a disk player, a stereo system, and/or a lighting system. Various embodiments use one or more peripheral devices 185 that provide a function based on the output of the system 100. For example, a disk player performs the function of playing the output of the system 100.

In various embodiments, control signals are communicated between the system 100 and the display 165, speakers 175, or other peripheral devices 185 using signaling such as AV. Link, CEC, or other communications protocols that enable device-to-device control with or without user intervention. The output devices may be communicatively coupled to system 100 via dedicated connections through respective interfaces 160, 170, and 180. Alternatively, the output devices may be connected to system 100 using the communications channel 190 via the communications interface 150. The display 165 and speakers 175 may be integrated in a single unit with the other components of system 100 in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

The embodiments can be carried out by computer software implemented by the processor 110 or by hardware, or by a combination of hardware and software. As a non-limiting example, the embodiments can be implemented by one or more integrated circuits. The memory 120 can be of any type appropriate to the technical environment and can be implemented using any appropriate data storage technology, such as optical memory devices, magnetic memory devices, semiconductor-based memory devices, fixed memory, and removable memory, as non-limiting examples. The processor 110 can be of any type appropriate to the technical environment, and can encompass one or more of microprocessors, general purpose computers, special purpose computers, and processors based on a multi-core architecture, as non-limiting examples.

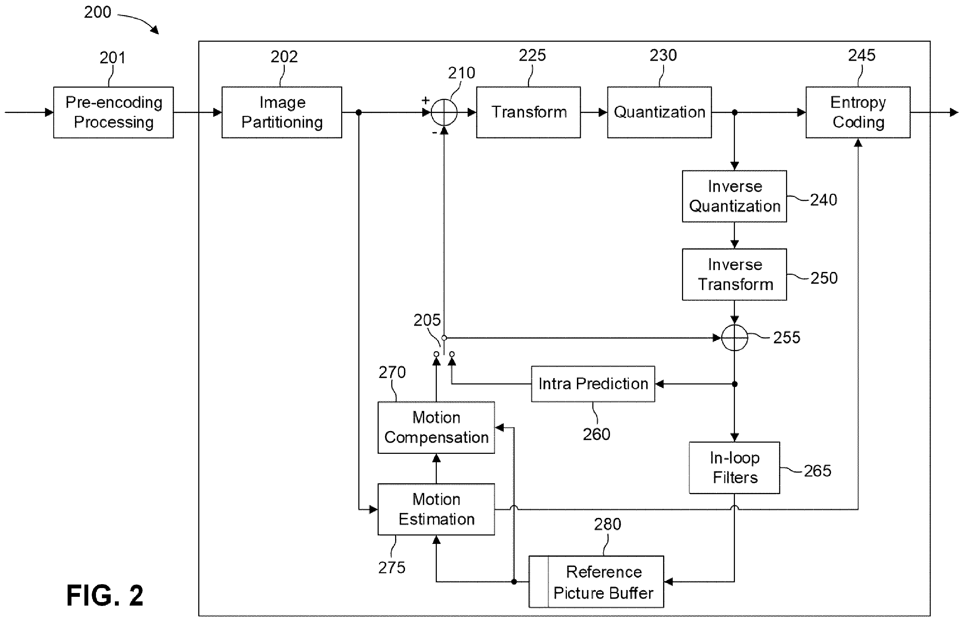

**FIG. 2** illustrates an example video encoder 200 within which aspects of the present embodiments may be implemented. Variations of example encoder 200 are contemplated, but the encoder 200 is described below for purposes of clarity without describing all expected variations. In some examples, FIG. 2 also illustrate an encoder in which improvements are made to HEVC standard or VVC standard or an encoder employing technologies similar to HEVC or VVC, such as an encoder ECM (Enhanced Compression Model) under development by JVET (Joint Video Exploration Team).

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the preprocessing and attached to the bitstream.

In the encoder 200, a picture is encoded by the encoder elements as described below. The picture to be encoded is partitioned (202) and processed in units of, for example, CTU (Coding Tree Units), CUs (Coding Units). Each unit is encoded using, for example, either an intra or inter mode. When a unit is encoded in an intra mode, it performs intra prediction (260), e.g. using an intra-prediction tool such as Decoder Side Intra Mode Derivation (DIMD). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block (a.k.a. prediction block) from the original image block.

The prediction residuals are then transformed (225) into transform coefficients c (a.k.a prediction residual transform coefficients) which are quantized (230) into quantization indexes $c_q$ (a.k.a transform coefficient levels or quantized transform coefficients on the encoder side). The quantization levels (a.k.a quantization indexes) $c_q$, as well as motion vectors and other syntax elements such as the picture partitioning information, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) (a.k.a. scaled) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset)/BIF (Bilateral Filtering)/ALF (Adaptive Loop Filter) filtering to reduce encoding artifacts. The filtered image is stored in a reference picture buffer (280). In-loop filters (265) are thus used to enhance reconstructed images before storing them in the reference picture buffer (280). In-loop filters form a whole family. Among them, deblocking filters (DBF) aim at reducing blocking artifacts occurring along block boundaries. Deblocking filters are usually designed to improve subjective quality, that is, the noticeability of such coding errors by the human psychovisual system. In usual video coding standards such as HEVC and VVC, deblocking filters are predetermined based on coding information (such as prediction modes, motion vectors, transform coefficients) and on local variations across block boundaries. On the other hand, adaptive loop filters (ALF) are learnt at encoder side in order to minimize a mean squared error with respect to source images, then the learned filter weights are encoded into the bitstream. Adaptive loop filters are usually applied at CTU-level, while deblocking filters are applied along block borders. The quantization of the residual coefficients may produce ringing artifacts around edges, both in still images and in moving objects in videos. Applying a bilateral filter (BIF) may significantly reduce ringing artifacts. BIF may be applied on decoded sample values directly after the inverse transform or on reconstructed samples after the deblocking filter.

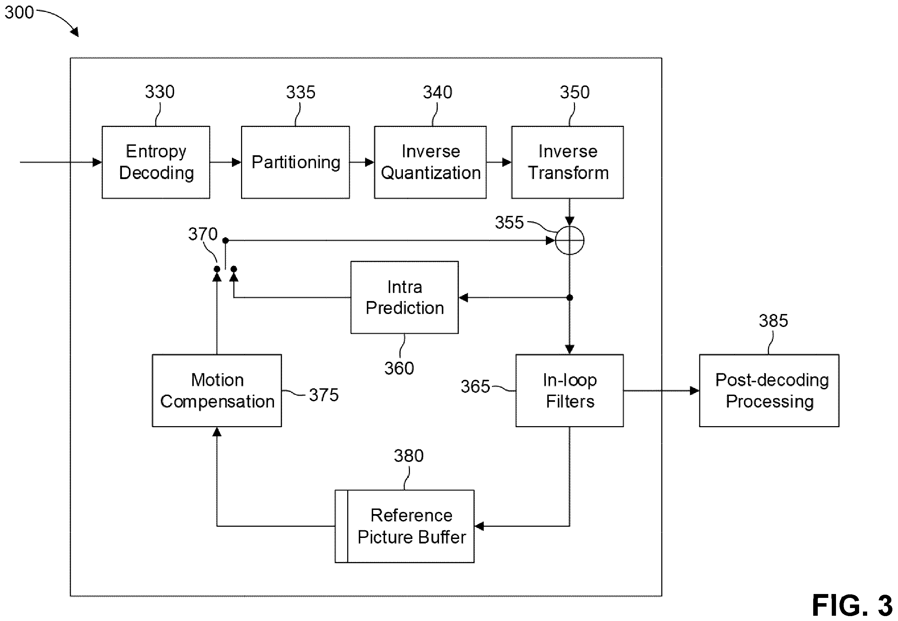

FIG. 3 illustrates a block diagram of an example video decoder 300 within which aspects of the present embodiments may be implemented. In the decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data. Variations of example decoder 300 are contemplated, but the decoder 300 is described below for purposes of clarity without describing all expected variations.

In particular, the input of the decoder includes a video bitstream, which can be generated by video encoder 200. The bitstream is first entropy decoded (330) to obtain quantization levels $c_q$ (a.k.a. transform coefficient levels or quantization levels on the decoder side), prediction modes, motion vectors, and other coded information. The picture partition information indicates how the picture is partitioned. The decoder may therefore divide (335) the picture according to the decoded picture partitioning information. The quantization levels $c_q$ are de-quantized (340) into reconstructed transform coefficients $c_r$. De-quantization is also named scaling. The reconstructed transform coefficients $c_r$ are inverse transformed (350) to obtain the prediction residuals. Combining (355) the prediction residuals and the predicted block (a.k.a. prediction block), an image block is reconstructed. The predicted block can be obtained (370) from intra prediction (360) or motion-compensated prediction (i.e., inter prediction) (375). In-loop filters (365), e.g., the same in-loop filters as applied on the encoder side (265), are applied to the reconstructed image. The filtered image is stored at a reference picture buffer (380). Note that, for a given picture, the contents of the reference picture buffer 380 on the decoder 300 side is identical to the contents of the reference picture buffer 280 on the encoder 200 side for the same picture.

The decoded picture can further go through post-decoding processing (385), for example, an inverse color transform (e.g., conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream.

In VVC and ECM, intra prediction may be derived through various intra prediction modes. To capture the arbitrary edge directions presented in natural video, ECM features 65 directional intra prediction modes as in VVC. For predicting blocks with smoothly varying textures, the PLANAR and DC modes are used.

When DIMD (Decoder Side Intra Mode Derivation) is applied, a horizontal gradient and a vertical gradient are calculated for each sample in a template of reconstructed neighbor samples to build a Histogram of Gradients (HoG). Up to five intra modes are derived from the gradients, and those five predictors are combined with the planar mode predictor with weights derived from the histogram of gradients.

When used, TIMD (Template-based Intra Mode Derivation) is applied the same way on the encoder and decoder sides. For each intra prediction mode in the MPM list of the current block, if needed, supplemented with default modes, it computes a prediction of the template of the block from the decoded reference samples of the template, and the SATD (Sum of Absolute Transformed Differences) between this prediction and the template of the block is calculated. The two intra prediction modes with the minimum SATDs are selected as the TIMD modes.

Intra template matching prediction (IntraTMP) is an intra prediction mode that copies a prediction block from the reconstructed part of the current frame, whose L-shaped template most closely matches the current template. For a predefined search range, the encoder searches for the most similar template to the current template in a reconstructed part of the current frame and uses the corresponding block as a prediction block. The encoder then signals the usage of this mode, and the same prediction operation is performed at the decoder side.

In Intra Block Copy (IBC), the prediction is obtained from a reference block within the same picture indicated by a block vector.

To predict the samples of a block of width W and height H, Matrix-based Intra Prediction (MIP) takes one line of H reconstructed neighboring boundary samples left of the block and one line of W reconstructed neighboring boundary samples above the block as input. The generation of the prediction signal is based on averaging neighboring samples, matrix vector multiplication with the averaged samples and linear interpolation.

Spatial geometric partitioning mode (SGPM) is an intra mode that resembles the inter coding tool of geometric partitioning mode (GPM), where the two prediction parts are generated from the intra predicted process. In this mode, a candidate list is built with each entry containing one partition split and two intra prediction modes. The selected candidate index is signalled.

In VVC and ECM, various transforms may be used (e.g., in modules 225 and 250 of the encoder and 350 of the decoder).

In VVC, a transform (e.g., a primary transform) may be applied on residual blocks on encoder side and a corresponding inverse transform may be applied on the decoder side. The transform may be selected among extended transform kernels. This is known as Multiple Transform Selection (MTS). For example, DST7 and DCT8 transform kernels may be used in addition to DCT2. These kernels are used for intra and inter coding. Transform skip may also be used. Five different transform pairs (e.g., a pair comprising a horizontal transform and a vertical transform) are supported, including (DCT2, DCT2) and a plurality (e.g., four) MTS (Multiple Transform Selection) mode combinations, e.g., (DST7, DST7), (DST7, DCT8), (DCT8, DST7) and (DCT8, DCT8).

In ECM, additional transforms (e.g., primary transforms) including DCT5, DST4, DST1, and identity transform (IDT) may be employed. In the ECM, the intra MTS (e.g., explicit intra MTS) depends on the intra prediction mode of the current block. The intra prediction acts as input to a lookup table (LUT) to get a suitable transform set for the block. This is done to take advantage of the correlation between the directional intra modes and residuals type as residual samples tend to have larger absolute values when they are far away from the reference samples.

To deduce the intra mode for transform selection for non-directional modes, such as DIMD, TIMD, SGPM, EIP (Extrapolation filter-based Intra Prediction mode), MIP, IntraTMP, IBC, and inter blocks, some methods have been proposed. For example, the DIMD process is used on the prediction block to derive a virtual intra prediction mode (VIPM) that is used for transform selection. Specifically, a horizontal gradient and a vertical gradient are calculated for each predicted sample to build a Histogram of Gradients (HoG). Then, the intra prediction mode with the largest histogram amplitude value (VIPM) is used to determine the MTS transform set (e.g., a set of possible transform pairs). Here, an angular mode means a directional intra prediction mode. Planar and DC can be referred as non-angular modes. The VIPM mode is derived to indicate the characteristics of the prediction residuals and therefore is used to indicate the transform set selection, even though the VIPM mode is not used for actual encoding.

In ECM, MTS transform sets are made dependent on the TU size (Transform Unit size) and intra mode information. Overall, 16 different TU sizes are considered, and for each TU size, 5 different classes are considered depending on intra mode information. For each class, 1, 4 or 6 different transform pairs (MTS candidates) are considered. The number of intra MTS candidates is adaptively selected (between 1, 4 and 6 MTS candidates) depending on the sum of absolute value of transform coefficients. The sum is compared against two fixed thresholds to determine the total number of allowed MTS candidates:

$$\text{total number of allowed MTS candidates} = \begin{cases} 1, \text{if sum} \leq \text{th0} \\ 4, \text{if th0} < \text{sum} \leq \text{th1} \\ 6, \text{if sum} > \text{th1} \end{cases}$$

Although a total of 80 (16 transform sizes times 5 classes) different classes are considered, some of these classes may share a same transform set. In ECM, there are 58 (less than 80) unique entries in the resultant look-up table (LUT).

For angular modes, a joint symmetry over TU shape and intra prediction is considered. So, a mode i (i > 34) with TU shape A×B will be mapped to the same class corresponding to the mode j = (68 - i) with TU shape B×A. However, for each transform pair the order of the horizontal and vertical transform kernel is swapped. For example, for a 16x4 block with mode 18 (horizontal prediction) and a 4x16 block with mode 50 (vertical prediction) are mapped to the same class. However, the vertical and horizontal transform kernels are swapped. For the wide-angle modes the nearest conventional angular mode is used for the transform set determination. For example, mode 2 is used for all the modes between -2 and -14. Similarly, mode 66 is used for mode 67 to mode 80. In addition, a dedicated mode index is assigned to MIP, resulting in a total of 36 possible modes entries in the LUT.

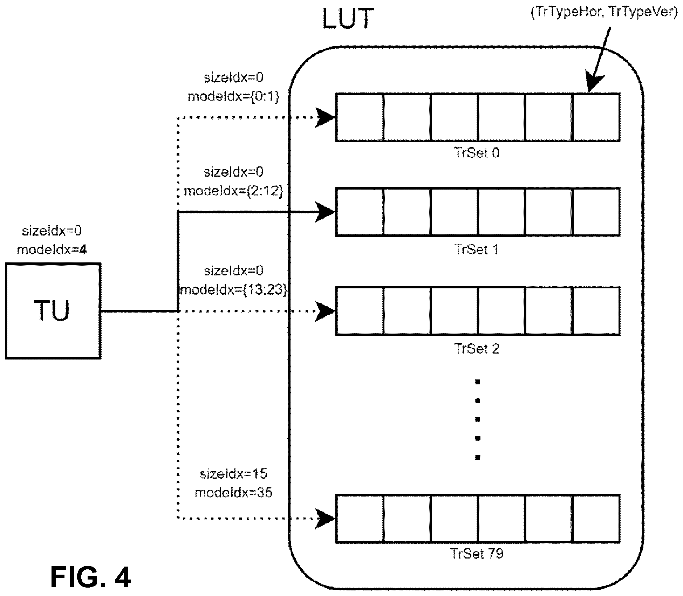

An example of transform set selection in the LUT for a given TU size and intra mode is illustrated in **FIG. 4**, where a transform set (TrSet i) is selected based on the TU size (sizeIdx) and the intra mode (modeIdx). In the example of FIG. 4, sizeIdx is equal to 0 and modeIdx is equal to 4, and TrSet 1 is selected.

IDT is applied for blocks that are 16x16 or smaller and have intra modes within the proximity of horizontal and vertical intra directions, where the proximity is defined by a threshold that depends on the block size. If the transform index is equal to 3 and block satisfies the above condition, the horizontal and/or vertical identity transform is applied.

The transformed coefficients from the primary transform can be further transformed with a non-separable transform (also known as secondary transform) applied to the low frequency part. This is known as low-frequency non-separable transform (LFNST). The main idea of this transform stage is to further remove signal redundancies that are not captured by the separable two-dimensional first stage transform (DCT-II and MTS). The transform matrices are derived from offline training by minimizing the correlation between transform coefficients, e.g., using principal component analysis.

In VVC, 4 transform sets and 2 non-separable transform matrices/kernels (candidates) per transform set are used in LFNST. The mapping from the intra prediction mode to the transform set is pre-defined. For each LFNST transform set, the selected non-separable secondary transform candidate is further specified by the explicitly signalled LFNST index.

In ECM, the LFNST design of VVC is extended. The number of LFNST sets ($S$) and candidates ($C$) are extended to $S$=35 and $C$=3, and the LFNST set (identified by the index lfnstTrSetIdx) for a given intra mode (e.g., predModeIntra) is derived according to the following formula:

- For predModeIntra < 0, lfnstTrSetIdx is equal to 2
- lfnstTrSetIdx = predModeIntra, for predModeIntra in [0,34]
- lfnstTrSetIdx = 68 - predModeIntra, for predModeIntra in [35,66]

Three different kernels, LFNST4, LFNST8, and LFNST16, are defined to indicate LFNST kernel sets, which are applied to 4xN/Nx4 (N≥4), 8xN/Nx8 (N≥8), and MxN (M, N≥16), respectively where M and N defines the block size. The mapping from intra prediction modes to these sets is shown in Table 1.

Table 1 - Mapping of intra prediction modes to LFNST set index

| Intra pred mode | -14 | -13 | -12 | -11 | -10 | -9 | -8 | -7 | -6 | -5 | -4 | -3 | -2 | -1 |
|---|---|---|---|---|---|---|---|---|---|---|---|---|---|---|
| LFNST set index | 2 | 2 | 2 | 2 | 2 | 2 | 2 | 2 | 2 | 2 | 2 | 2 | 2 | 2 |
| Intra pred mode | 0 | 1 | 2 | 3 | 4 | 5 | 6 | 7 | 8 | 9 | 10 | 11 | 12 | 13 |
| LFNST set index | 0 | 1 | 2 | 3 | 4 | 5 | 6 | 7 | 8 | 9 | 10 | 11 | 12 | 13 |
| Intra pred mode | 14 | 15 | 16 | 17 | 18 | 19 | 20 | 21 | 22 | 23 | 24 | 25 | 26 | 27 |
| LFNST set index | 14 | 15 | 16 | 17 | 18 | 19 | 20 | 21 | 22 | 23 | 24 | 25 | 26 | 27 |
| Intra pred mode | 28 | 29 | 30 | 31 | 32 | 33 | 34 | 35 | 36 | 37 | 38 | 39 | 40 | 41 |
| LFNST set index | 28 | 29 | 30 | 31 | 32 | 33 | 34 | 33 | 32 | 31 | 30 | 29 | 28 | 27 |
| Intra pred mode | 42 | 43 | 44 | 45 | 46 | 47 | 48 | 49 | 50 | 51 | 52 | 53 | 54 | 55 |
| LFNST set index | 26 | 25 | 24 | 23 | 22 | 21 | 20 | 19 | 18 | 17 | 16 | 15 | 14 | 13 |
| Intra pred mode | 56 | 57 | 58 | 59 | 60 | 61 | 62 | 63 | 64 | 65 | 66 | 67 | 68 | 69 |
| LFNST set index | 12 | 11 | 10 | 9 | 8 | 7 | 6 | 5 | 4 | 3 | 2 | 2 | 2 | 2 |
| Intra pred mode | 70 | 71 | 72 | 73 | 74 | 75 | 76 | 77 | 78 | 79 | 80 | | | |
| LFNST set index | 2 | 2 | 2 | 2 | 2 | 2 | 2 | 2 | 2 | 2 | 2 | | | |

The kernel dimensions are specified by:
(LFSNT4, LFNST8*, LFNST16*) = (16x16, 32x64, 32x96)

The forward LFNST is applied to top-left low frequency region, which is called Region-Of-Interest (ROI). When LFNST is applied, primary-transformed coefficients that exist in the region other than ROI are zeroed out, which is not changed from VVC.

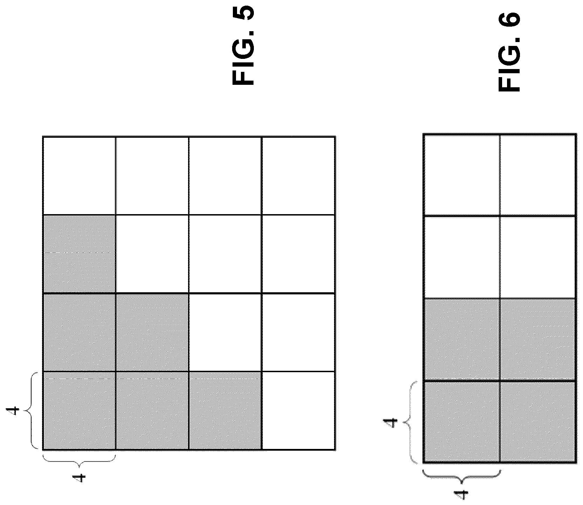

The ROI for LFNST16 is depicted **FIG. 5.** It consists of six 4x4 sub-blocks, which are consecutive in scan order. Since the number of input samples is 96, transform matrix for forward LFNST16 can be Rx96. R is chosen to be 32 in ECM, 32 coefficients (two 4x4 sub-blocks) are generated from forward LFNST16 accordingly, which are placed following coefficient scan order. The ROI for LFNST8 is shown in **FIG. 6.** The forward LFNST8 matrix can be Rx64 and R is chosen to be 32. The generated coefficients are located in the same manner as with LFNST16.

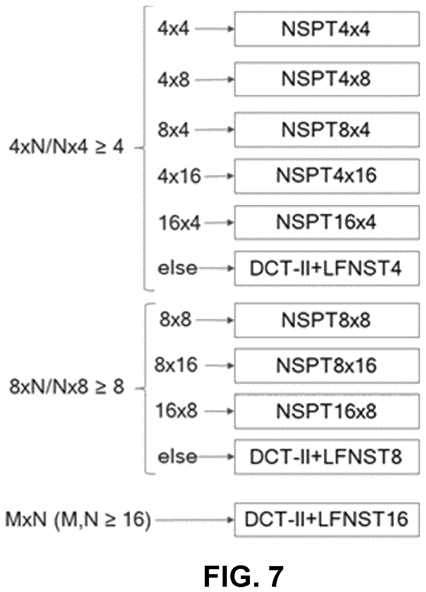

In ECM, NSPT (Non-Separable Primary Transform) has been designed to replace the 2 stages of transform (DCT2-LFNST) by a single non-separable transform. This is only allowed for small blocks as indicated in **FIG. 7.** All NSPTs consist of 35 sets and 3 candidates (similar to the current LFNST). The kernels of NSPT have the following shapes:

- NSPT4x4: 16x16

- NSPT4x8/NSPT8x4: 32x20

- NSPT8x8: 64x32

- NSPT4×16/NSPT16×4: 64x24

- NSPT8×16/NSPT16×8: 128x40

Therefore, 12, 32, 40 and 88 coefficients are zeroed-out using NSPT4x8/NSPT8x4, NSPT8x8, NSPT4×16/NSPT16×4 and NSPT8×16/NSPT16×8 respectively.

To improve the performance, multiple transform set selection (MTSS) has been introduced where an additional transform set is tested in addition to the initial one, e.g., for modes relying on VIPM for transform set selection. This provides additional options to the encoder. In this approach, the LFNST/NSPT kernels from both an alternative transform set and an initial transform set are tested. Then, the selected transform set as well as the index of LFNST/NSPT kernel in the set are signalled to the decoder.

In ECM, the LFNST/NSPT transform set is implicitly decided by an intra prediction mode (IPM). For a block coded with PLANAR, DC or directional modes, the IPM is set as the intra prediction mode itself. For a DIMD coded block, the IPM (VIPM for transform selection) is set as the best mode derived by the DIMD process with neighboring reconstructed pixels. For a TIMD coded block, the IPM (VIPM for transform selection) is set as the best mode derived by the TIMD process. For a MIP or ITMP coded block, the IPM (VIPM for transform selection) is set as the best mode derived by the DIMD process with the prediction. For an SGPM coded block, the IPM is set as the mode corresponding to the split mode of SGPM.

The prediction strategies of DIMD, TIMD, SGPM, MIP and ITMP are different from normal intra prediction modes like PLANAR, DC and directional modes. DIMD, TIMD, SGPM and ITMP allow multiple predictions combination. MIP makes the prediction using matrix calculation. ITMP references the reconstructed region in the current picture. The prediction residual may illustrate different feature from the derived IPM (VIPM for transform selection). Multiple transform set selection (MTSS) allow CUs coded with DIMD, TIMD, MIP, SGPM and ITMP to select one LFNST/NSPT transform set out of 2 candidate sets. If the current block is coded with DIMD, TIMD, MIP, SGPM, ITMP and LFNST/NSPT is used, one more bin is employed to indicate whether the first or the second candidate transform set is selected. The first candidate transform set remains the same as the current ECM. The second candidate transform set is derived by the DIMD process with neighboring reconstructed pixels. Specially, if a TIMD coded block applies fusion, the second TIMD IPM is first considered to derive the second candidate set. For an SGPM coded block, the 2 IPM that SGPM uses are first considered to derive the second candidate set. The difference between the first and second IPM should be larger than 4 to keep the diversity.

The same approach of MTSS has been proposed for intra MTS to enable an alternative transform set to be selected by the encoder and signaled in the bitstream, wherein a similar mechanism based on LUT is used for primary transform pair selection. However, unlike LFNST/NSPT, where each transform kernel is unique, some primary transform pairs are shared between transform sets in the MTS lookup table. This is a problem in MTSS for intra MTS as the same transform pair can be tested both in the initial and the alternative transform sets.

In contrast, a method is disclosed that introduces mechanisms to reduce (e.g., eliminate) redundancy in the alternative transform set in MTSS for MTS (e.g., for intra MTS or inter MTS). More precisely, an alternative transform set is obtained (e.g., built), e.g., in MTSS for MTS, using non-redundant primary transform pairs. The method may be applied in case of Intra MTS but also applies to Inter MTS. The method thus enhances the alternative transform set in MTSS (e.g., for intra MTS) by removing redundant primary transform pairs.

The various examples disclosed below may be implemented in the encoder 200 of FIG. 2 or in decoder 300 of FIG. 3. In particular, the various methods and other aspects described in this application can be used to modify modules 225, 250, 350 of the video encoder 200 and decoder 300 as shown in FIG. 2 and FIG. 3.

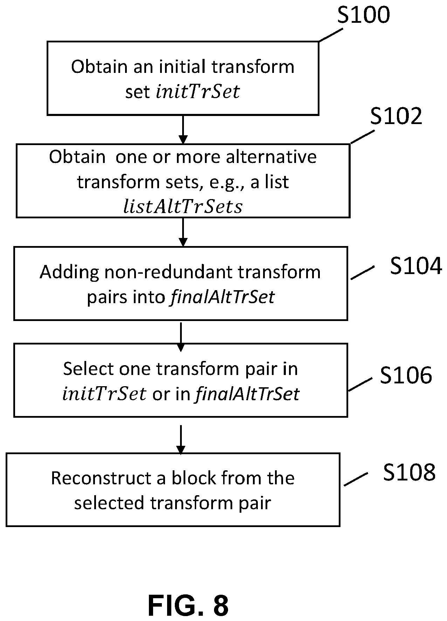

**FIG. 8** depicts a flowchart of a decoding method (encoding method respectively) according to an example.

At S100, an initial transform set (e.g., an initial MTS transform set), denoted as initTrSet, is obtained. The initial transform set comprises one or more transform pairs. For example, a transform pair comprises a vertical transform and a horizontal transform.

At S102, one or more alternative transform sets, denoted by listAltTrSets, are obtained, e.g., in the form of a list of alternative transform sets. listAltTrSets is a list of transform sets, each transform set comprising one or more transform pairs.

At S104, the redundant transform pairs, i.e., transform pairs already present in initTrSet, are removed from listAltTrSets to obtain a final alternative transform set, denoted by finalAltTrSet. Removing redundant transform pairs from listAltTrSets is equivalent to adding non-redundant transform pairs of the one or more alternative transform sets into the final alternative transform set finalAltTrSet. In an example, each transform set of listAltTrSets may be parsed in order to only keep the transform pairs that are non-redundant with the transform pairs of initTrSet.

At S106, one transform pair is selected from either initTrSet or finalAltTrSet. In an example, the transform pair may be selected based on an index decoded from the bitstream. Indeed, the selected transform pair and the transform set among initTrSet and finalAltTrSet to which the selected transform pair belongs may be signaled in the bitstream. On the encoder side, the transform pair may be selected based on rate-distortion optimization.

At S108, a block (e.g., an image block) is reconstructed (encoded respectively) using the selected transform pair.

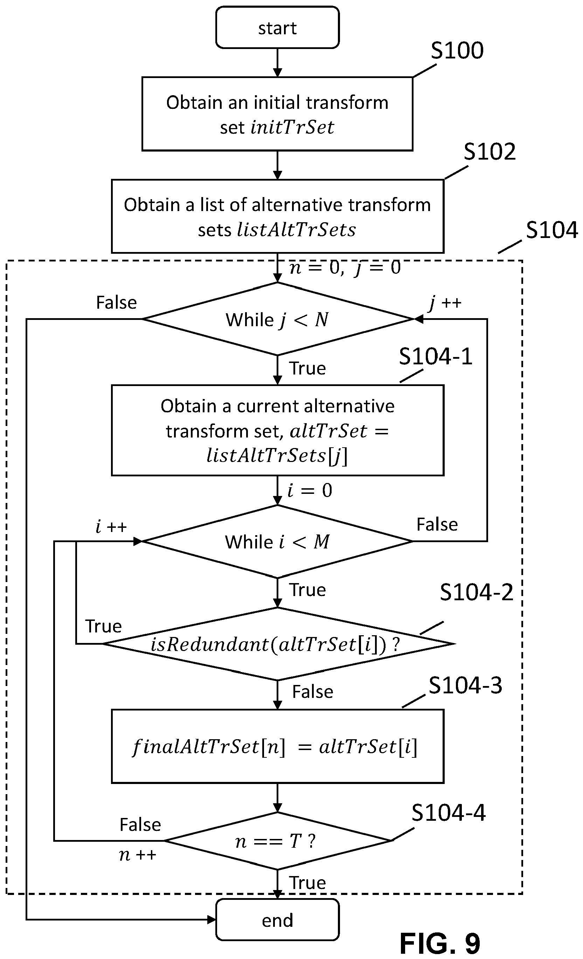

**FIG. 9** depicts a flowchart of a method for determining an alternative transform set, e.g., for use in MTSS for MTS. FIG. 9 details the step S104. The steps of FIG. 9 identical to the steps of FIG. 8 are identified with the same numeral references. Steps S106 and S108 (not represented on FIG. 9) apply once the alternative transform set is determined. The following variables are used: initTrSet which represents the initial transform set (e.g., the initial MTS transform set), listAltTrSets which represents the list of alternative transforms sets, altTrSet which represents the current alternative transform, finalAltTrSet which represents the final alternative transform set, isRedundant(trPair) which represents a method used to check if a transform pair trPair is redundant in initTrSet and finalAltTrSet, N is the number of alternative transform sets in listAltTrSets, M is the number of transforms within the current alternative transform set altTrSet, T is the number of transform candidates in the final alternative transform set finalAltTrSet. The process of building the alternative transform set is performed by both the encoder and the decoder.

At S100, a list of initial transform sets, denoted by initTrSets, is obtained.

At S102, a list of alternative transform sets, denoted by listAltTrSets, is obtained.

At S104, the transform pairs from each transform set in listAltTrSets are compared with the transform pairs contained in the initial transform set initTrSet in order to remove from listAltTrSets the redundant transform pairs, i.e., transform pairs already present in initTrSet. To this aim, a current alternative transform set is obtained at S104-1. It is checked at S104-2 whether it is a redundant pair. Non-redundant pairs, i.e., combinations of horizontal and vertical primary transforms that are not already present in initTrSet and finalAltTrSet, are added at S104-3 to the final alternative transform set finalAltTrSet. The process ends when the maximum number of candidates T is reached (S104-4) or if all alternative transform sets from finalAltTrSet are tested. In that latter case, finalAltTrSet may contain fewer transforms than initTrSet.

In a variant of this embodiment, the checking of the redundancy of a transform pair *trPair* in *initTrSet* and *finalAltTrSet* (i.e. the method isRedundant(trPair)) is modified.

In an example, instead of determining whether the whole transform pair is redundant, the vertical and horizontal transforms of *trPair* can be considered separately. Therefore, a transform pair *trPair* is added to *finalAltTrSet* only if both its vertical and horizontal transforms are different from the transforms in transform pairs from *initTrSet* or *finalAltTrSet.* For example, instead of determining whether a transform pair $(T_H, T_V)$ is redundant, $T_H$ and Tv are compared separately with the transforms in transform pairs from initTrSet or finalAltTrSet. For example, if $T_H$ is already used as a transform in any of the transform pairs in initTrSet or finalAltTrSet, the transform pair $(T_H, T_V)$ is not considered. The underlying idea is to maximize the diversity between *finalAltTrSet* and *initTrSet.*

In another example, a transform pair *trPair* is added to *finalAltTrSet* only if it shares one transform (i.e., either a vertical or a horizontal transform) with at least one of the transform pairs in *initTrSet* and *finalAltTrSet.* The underlying idea is to populate *finalAltTrSet* with transform pairs that are relatively similar to the ones in *initTrSet.*

In another example, instead of checking if the vertical or horizontal transforms of *trPair* are redundant, the nature of the vertical and horizontal transforms of *trPair* are considered (i.e., increasing, decreasing, or constant transform). Therefore, it is proposed to add a transform pair in *finalAltTrSet* only if one of its transforms (i.e., vertical or horizontal) is of the same nature as a transform of at least one transform pair from *finalAltTrSet* and *initTrSet.*

In an example, it is proposed to add a transform pair in *finalAltTrSet* only if the nature of one of its transforms (i.e., vertical or horizontal) is not of the same nature of all transforms in transform pair from *finalAltTrSet* and *initTrSet.*

In another example, it is possible to restrict adding some transform types based on the mode. For instance, pairs containing DCT8 may not be adapted to directional intra prediction residuals and might not be considered in the final alternative transform set *finalAltTrSet.*

In another example, if a pair is redundant, it is proposed to replace the redundant transform with another transform of the same nature and include it in *finalAltTrSet.* For instance, if the transform pair from *altTrSet* (DCT5, DST7) is redundant in *initTrSet,* (DCT2, DST7) or (DCT5, DST4) is included in *finalAltTrSet* instead.

In another example, the list of alternative transform set *listAltTrSets* is dependent on the mode. Therefore, it is possible to control the alternative transform sets that are used at a mode level. For instance, the EIP mode can have a different *listAltTrSets* than the DIMD mode.

In another example, the list of alternative transform set *listAltTrSets* is dependent on both the mode and the size of the block.

The next examples describe different alternative transform sets that can be used/added to determine (e.g., build) the list of alternative transform sets *listAltTrSets* at S 102.

In the intra-MTS lookup table, specific transform sets are defined and used for non-directional modes, i.e., planar, DC, and MIP. Planar and DC modes share the same transform set in the LUT, while MIP has its own transform set. The planar and DC transform sets may be used as an alternative transform set in MTSS for MTS.

In an example, the MIP set is added in the list of alternative transform sets listAltTrSets. This transform set can be particularly useful for the EIP mode which shares similar residual characteristics as MIP.

In a variant, a non-directional transform set is added in the listAltTrSets, e.g., based on the statistics of the HoG. If the largest histogram amplitude value (e.g., maximum intensity of gradient) in the HoG is below a certain threshold, a non-directional transform set (i.e., planar/DC or MIP) is added to listAltTrSets.

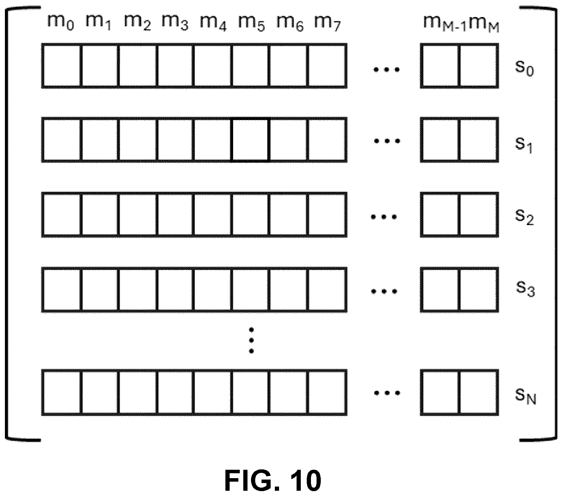

In another example, the intra-MTS lookup table is parsed to find relevant alternative transform sets to include in *listAltTrSets.* In the ECM, the intra-MTS lookup table maps a primary transform set to a pair of intra mode m (e.g., a mode index) and block size s (e.g., a size index) for the current block. An illustration of the intra-MTS lookup table is given in **FIG. 10.**

Generally, transform sets close to the initial transform set initTrSet in the lookup table tend to be relevant for the current block as they are mapped to intra modes and block sizes that share similar residual characteristics.

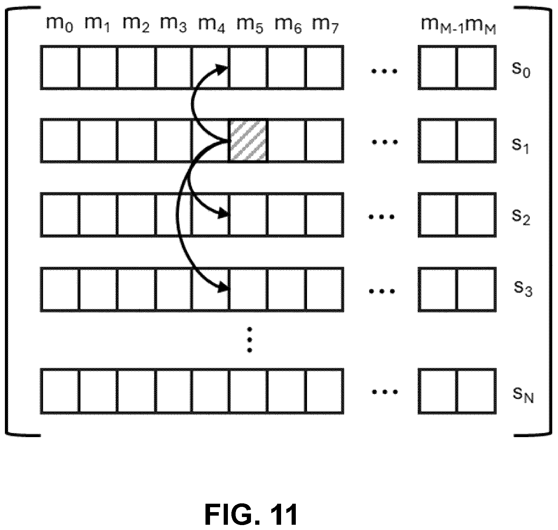

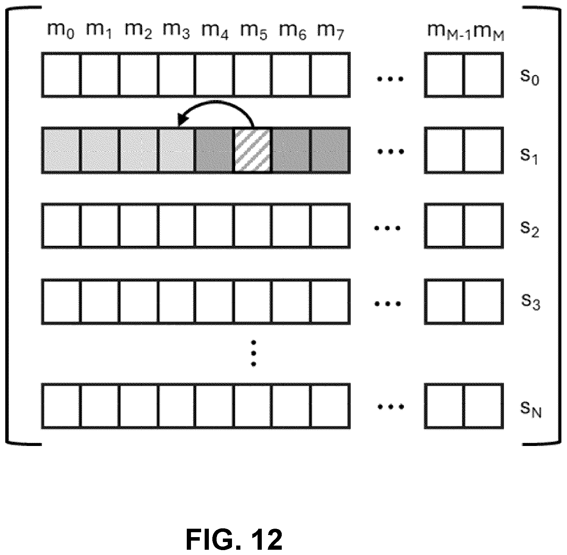

Therefore, in this example, relevant non-redundant transform pairs are found by looking at transform sets around the position of the initial transform set initTrSet in the intra MTS LUT. It is proposed to either parse the lookup table by shifting the size index (**FIG. 11**) or by shifting the mode index (**FIG. 12**).

In an example, a non-redundant alternative transform set is thus obtained by shifting the size index of the *initTrSet* in the lookup-table and is added to the listAltTrSets. This is illustrated by FIG. 11 wherein the shifting is represented by the arrows. In this example, the initial transform set initTrSet is at position $(m_5, s_1)$. The new size index is computed by increasing or decreasing the initial size index. The size index is bounded between 0 and N.

In a variant, the size index of the initial transform set initTrSet is shifted (i.e., increased or decreased) until a non-redundant transform set is reached. This non-redundant transform set is added to listAltTrSets.

In a variant, the size index can only be shifted to a size index of the same shape as the initial transform set initTrSet (e.g., size index corresponding to block sizes 8x16 or 16x32 if size index corresponds to block size 4x8).

In a variant, the size index can only be shifted to a size index corresponding to similar shapes as the initial transform set initTrSet (i.e., square, horizontal or vertical rectangular blocks).

In another variant, it is proposed to obtain an alternative transform pair by shifting the intra mode index m of the initTrSet in the lookup-table. An illustration of this process is illustrated by FIG. 12.

In this example, transform sets are shared between $(m_0, s_1)$, $(m_1, s_1)$, $(m_2, s_1)$, $(m_3, s_1)$ on the one hand (represented in light grey) and by $(m_4, s_1)$, $(m_5, s_1)$, $(m_6, s_1)$, $(m_7, s_1)$ on the other hand (represented in darker grey). In this example, the initial transform set initTrSet is at position $(m_5, s_1)$.

In this example, the mode index m of the initial transform set initTrSet is shifted (i.e., increased or decreased) until a non-redundant transform set is reached. In the example of FIG. 12, this non-redundant set is for example the one located at $(m_3, s_1)$. This non-redundant transform set is added to listAltTrSets.

In a variant, the number of times the mode index is shifted before reaching a non-redundant transform set is counted. In the example of FIG. 12, the mode index is shifted twice before reaching the non-redundant transform set located at $(m_3, s_1)$. If this count is above a certain value, the alternative transform set is not added to listAltTrSets.

In another variant, the mode index corresponding to the VIPM2 (i.e., the second mode in DIMD HoG, or HoG of neighboring blocks) is the starting point of the parsing instead of the mode index m of the initial transform set initTrSet.

In the ECM, the transform pair candidates of inter MTS are all DCT8 and DST7 combinations. This allows for capturing the energy in the corner of the block, which is typical for inter residuals. Some intra-modes, such as IntraTMP and IBC, generate their predictions using techniques similar to inter block matching. Consequently, their residuals have similar characteristics to those resulting from inter prediction.

In this exmaple, it is proposed to create an alternative transform set composed of the inter MTS transform candidates, i.e., (DCT8, DCT8), (DCT8, DST7), (DST7, DST8) and (DST7, DST7), and include it (e.g., at S202) to *listAltTrSets.*

Moreover, the present aspects are not limited to ECM, VVC or HEVC, and can be applied, for example, to other standards and recommendations, and extensions of any such standards and recommendations. Unless indicated otherwise, or technically precluded, the aspects described in this application can be used individually or in combination.

Various numeric values are used in the present application. The specific values are for example purposes and the aspects described are not limited to these specific values.

Note that syntax elements as used herein, such as terms in equations and algorithms, signal (e.g., flag, mode) labels/names, etc., such as, and so on, are descriptive terms. As such, they do not preclude the use of other syntax element names.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, removing redundant transform pairs from the alternative transform set.

As further examples, in one embodiment "decoding" refers only to entropy decoding, in another embodiment "decoding" refers only to differential decoding, and in another embodiment "decoding" refers to a combination of entropy decoding and differential decoding, and in another embodiment "decoding" refers to the whole reconstructing picture process including entropy decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application, for example, removing redundant transform pairs from the alternative transform set.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

This disclosure has described various pieces of information, such as for example syntax, that can be transmitted or stored, for example. This information can be packaged or arranged in a variety of manners, including for example manners common in video standards such as putting the information into an SPS, a PPS, a NAL unit, a header (for example, a NAL unit header, or a slice header), or an SEI message. Other manners are also available, including for example manners common for system level or application level standards such as putting the information into one or more of the following:

  a. SDP (session description protocol), a format for describing multimedia communication sessions for the purposes of session announcement and session invitation, for example as described in RFCs and used in conjunction with RTP (Real-time Transport Protocol) transmission.
  b. DASH MPD (Media Presentation Description) Descriptors, for example as used in DASH and transmitted over HTTP, a Descriptor is associated with a Representation or collection of Representations to provide additional characteristic to the content Representation.
  c. RTP header extensions, for example as used during RTP streaming.
  d. ISO Base Media File Format, for example as used in OMAF and using boxes which are object-oriented building blocks defined by a unique type identifier and length also known as 'atoms' in some specifications.
  e. HLS (HTTP live Streaming) manifest transmitted over HTTP. A manifest can be associated, for example, to a version or collection of versions of a content to provide characteristics of the version or collection of versions.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed. Further, the terms "any of" followed by a listing of a plurality of items and/or a plurality of categories of items, as used herein, are intended to include "any of," "any combination of," "any multiple of," and/or "any combination of multiples of" the items and/or the categories of items, individually or in conjunction with other items and/or other categories of items.

Also, as used herein, the word "signal" refers to, among other things, indicating something to a corresponding decoder. For example, in certain embodiments the encoder signals a particular one of a transform set, e.g., among the initial transform set and the alternative transform set. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Many examples are described herein. Features of examples may be provided alone or in any combination, across various claim categories and types. Further, examples may include one or more of the features, devices, or aspects described herein, alone or in any combination, across various claim categories and types. For example, features described herein may be implemented in a bitstream or signal that includes information generated as described herein. The information may allow a decoder to decode a bitstream, the encoder, bitstream, and/or decoder according to any of the embodiments described. For example, features described herein may be implemented by creating and/or transmitting and/or receiving and/or decoding a bitstream or signal. For example, features described herein may be implemented a method, process, apparatus, medium storing instructions, medium storing data, or signal. For example, features described herein may be implemented by a TV, set-top box, cell phone, tablet, or other electronic device that performs decoding. The TV, set-top box, cell phone, tablet, or other electronic device may display (e.g. using a monitor, screen, or other type of display) a resulting image (e.g., an image from residual reconstruction of the video bitstream). The TV, set-top box, cell phone, tablet, or other electronic device may receive a signal including an encoded image and perform decoding.

A number of embodiments has been described above. Features of these embodiments can be provided alone or in any combination, across various claim categories and types.

**Claims**

1.  A decoding method comprising:

    obtaining an initial transform set ;
    obtaining one or more alternative transform sets, each alternative transform set comprising one or more transform pairs ;
    adding transform pairs of the one or more alternative transform sets into a final alternative transform set only if non-redundant with a transform pair of the initial transform set;
    selecting a transform pair from any one of the initial transform set and the final alternative transform set; and
    reconstructing an image block using the selected transform pair.

2.  The method of claim 1, wherein a transform pair of the one or more alternative transform sets is non-redundant with a transform pair of the initial transform set if the transform pair of the one or more alternative transform sets is different from all transform pairs of the initial transform set.

3.  The method of claim 1, wherein a transform pair of the one or more alternative transform sets is non-redundant with a transform pair of the initial transform set if both transforms of the transform pair of the one or more alternative transform sets are different from the transforms in transform pairs of the initial transform set.

4.  The method of claim 1, wherein adding transform pairs of the one or more alternative transform sets into the final alternative transform set comprises adding a transform pair only if it shares one transform with at least one of the transform pairs in the initial transform set.

5.  The method of claim 1, wherein adding transform pairs of the one or more alternative transform sets into a final alternative transform set comprises adding a transform pair only if at least one transform in the transform pair is of same nature as a transform of at least one transform pair of the initial transform set.

6.  The method of claim 1, wherein obtaining one or more alternative transform sets comprises obtaining a matrix-based intra prediction transform set as an alternative transform set.

7.  The method of claim 1, wherein obtaining one or more alternative transform sets comprises obtaining, as an alternative transform set, a transform set associated with a non-directional mode in a case where a largest histogram amplitude value in a histogram of oriented gradients is below a value.

8.  The method of claim 1, wherein obtaining one or more alternative transform sets comprises obtaining an alternative transform set by shifting an intra mode index of the initial transform set in a look-up-table mapping transform sets to intra mode index and block size index.

9.  The method of claim 1, wherein obtaining one or more alternative transform sets comprises obtaining an alternative transform set by shifting a size index of the initial transform set in a look-up-table mapping transform sets to pair intra mode index and block size index.

10. The method of claim 1, wherein obtaining one or more alternative transform sets comprises adding an inter transform set to the one or more alternative transform sets.

**11.** An encoding method comprising:

obtaining an initial transform set ;
obtaining one or more alternative transform sets, each alternative transform set comprising one or more transform pairs ;
adding transform pairs of the one or more alternative transform sets into a final alternative transform set only if non-redundant with a transform pair of the initial transform set;
selecting a transform pair from any one of the initial transform set and the final alternative transform set; and
encoding an image block using the selected transform pair.

**12.** A decoding apparatus comprising one or more processors and at least one memory coupled to said one or more processors, wherein said one or more processors are configured to perform the method of any one of claims 1-9.

**13.** An encoding apparatus comprising one or more processors and at least one memory coupled to said one or more processors, wherein said one or more processors are configured to perform the method of claim 10.

**14.** A computer program comprising program code instructions for implementing the method according to any one of claims 1-9 when executed by a processor.

**15.** A computer readable storage medium having stored thereon instructions for implementing the method of any one of claims 1-10.

**16.** A computer readable storage medium having stored thereon instructions for implementing the method of any one of claims 1-10.

**17.** A signal comprising a bitstream, formed by performing the method of any one of claim 10.

**FIG. 1**

EP 4 661 395 A1

**FIG. 2**

EP 4 661 395 A1

FIG. 3

FIG. 4

FIG. 5

FIG. 6

EP 4 661 395 A1

$4xN/Nx4 \geq 4$

| | |
|---|---|
| 4x4 → | NSPT4x4 |
| 4x8 → | NSPT4x8 |
| 8x4 → | NSPT8x4 |
| 4x16 → | NSPT4x16 |
| 16x4 → | NSPT16x4 |
| else → | DCT-II+LFNST4 |

$8xN/Nx8 \geq 8$

| | |
|---|---|
| 8x8 → | NSPT8x8 |
| 8x16 → | NSPT8x16 |
| 16x8 → | NSPT16x8 |
| else → | DCT-II+LFNST8 |

MxN (M,N ≥ 16) → DCT-II+LFNST16

**FIG. 7**

S100

Obtain an initial transform
set *initTrSet*

S102

Obtain one or more alternative
transform sets, e.g., a list
*listAltTrSets*

Adding non-redundant transform
pairs into *finalAltTrSet*

S104

Select one transform pair in
*initTrSet* or in *finalAltTrSet*

S106

Reconstruct a block from the
selected transform pair

S108

# FIG. 8

```
                    ┌─────────┐
                    │  start  │
                    └────┬────┘
                         │                    ╲ S100
           ┌─────────────▼─────────────┐
           │   Obtain an initial transform │
           │   set initTrSet           │
           └─────────────┬─────────────┘
                         │                    ╲ S102
           ┌─────────────▼─────────────┐
           │  Obtain a list of alternative transform │
           │  sets listAltTrSets       │
           └─────────────┬─────────────┘
```

$n = 0, j = 0$

While $j < N$ — False / True

$j$ ++

**S104-1** Obtain a current alternative transform set, $altTrSet = listAltTrSets[j]$

$i = 0$

While $i < M$ — $i$ ++ / False

True

**S104-2** $isRedundant(altTrSet[i])$ ? — True / False

**S104-3** $finalAltTrSet[n] = altTrSet[i]$

**S104-4** $n == T$ ? — False $n$ ++ / True

```
                    ┌─────────┐
                    │   end   │
                    └─────────┘
```

**FIG. 9**

$$\begin{bmatrix} & m_0 \; m_1 \; m_2 \; m_3 \; m_4 \; m_5 \; m_6 \; m_7 \quad\quad m_{M-1} \; m_M & \\ & \boxed{\;\;\;\;\;\;\;\;\;} \;\cdots\; \boxed{\;\;} & s_0 \\ & \boxed{\;\;\;\;\;\;\;\;\;} \;\cdots\; \boxed{\;\;} & s_1 \\ & \boxed{\;\;\;\;\;\;\;\;\;} \;\cdots\; \boxed{\;\;} & s_2 \\ & \boxed{\;\;\;\;\;\;\;\;\;} \;\cdots\; \boxed{\;\;} & s_3 \\ & \boxed{\;\;\;\;\;\;\;\;\;} \;\cdots\; \boxed{\;\;} & s_N \end{bmatrix}$$

**FIG. 10**

FIG. 11

FIG. 12

Europäisches
Patentamt

European
Patent Office

Office européen
des brevets

# EUROPEAN SEARCH REPORT

**Application Number**

EP 24 30 5888

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/040120 A1 (EGILMEZ HILMI ENES [US] ET AL) 1 February 2024 (2024-02-01) | 1-3,6-17 | INV.<br>H04N19/12 |
| A | * abstract * | 4,5 | H04N19/176 |
| | * figures 3-6, 8, 15 * | | H04N19/593 |
| | * paragraph [0033] * | | |
| | * paragraph [0042] - paragraph [0044] * | | |
| | * paragraph [0057] * | | |
| | * paragraph [0089] * | | |
| | * paragraph [0092] - paragraph [0105] * | | |
| | ----- | | |
| X | BIATEK (TDF) T ET AL: "Adaptive Transform Sets for Inter Coding", 4. JVET MEETING; 20161015 - 20161021; CHENGDU; (THE JOINT VIDEO EXPLORATION TEAM OF ISO/IEC JTC1/SC29/WG11 AND ITU-T SG.16 ), , no. JVET-D0070 17 October 2016 (2016-10-17), XP030247410, Retrieved from the Internet: URL:http://phenix.int-evry.fr/jvet/doc_end _user/documents/4_Chengdu/wg11/JVET-D0070- v4.zip JVET-D0070_rev2.doc [retrieved on 2016-10-17] | 1-5, 11-17 | |
| A | * abstract *<br>* page 2 * | 6-10 | TECHNICAL FIELDS SEARCHED (IPC)<br><br>H04N |
| | ----- | | |

The present search report has been drawn up for all claims

| Place of search | Date of completion of the search | Examiner |
|---|---|---|
| The Hague | 7 November 2024 | Wedi, Thomas |

EPO FORM 1503 03.82 (P04C01)

## ANNEX TO THE EUROPEAN SEARCH REPORT
## ON EUROPEAN PATENT APPLICATION NO.

EP 24 30 5888

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2024

| Patent document cited in search report | Publication date | Patent family member(s) | Publication date |
|---|---|---|---|
| US 2024040120 A1 | 01-02-2024 | NONE | |

For more details about this annex : see Official Journal of the European Patent Office, No. 12/82